(19) Europäisches Patentamt
European Patent Office
Office européen des brevets

(11) Veröffentlichungsnummer: **0 100 440**
**B1**

(12) **EUROPÄISCHE PATENTSCHRIFT**

(45) Veröffentlichungstag der Patentschrift: **29.10.86**

(51) Int. Cl.[4]: **A 01 N 57/12,** A 01 N 25/04 // (A01N57/12, 39:04)

(21) Anmeldenummer: **83106404.3**

(22) Anmeldetag: **01.07.83**

(54) **Herbizid-Emulsionskonzentrate.**

(30) Priorität: **10.07.82 DE 3225941**

(43) Veröffentlichungstag der Anmeldung: **15.02.84 Patentblatt 84/7**

(45) Bekanntmachung des Hinweises auf die Patenterteilung: **29.10.86 Patentblatt 86/44**

(84) Benannte Vertragsstaaten: **AT BE CH DE FR GB IT LI LU NL SE**

(56) Entgegenhaltungen: **EP - A - 0 068 295**

(73) Patentinhaber: **A. Nattermann & Cie. GmbH, Nattermannallee 1, D-5000 Köln 30 (DE)**

(72) Erfinder: **Ghyczy, Miklos, Dr., Am serviesberg 12, D-5000 Köln 41 (DE)**
Erfinder: **Etschenberg, Eugen, Dr., Hirseweg 10, D-5000 Köln 41 (DE)**
Erfinder: **Osthoff, Heinrich, Dr., Ronsdorfer Strasse 12, D-5030 Hürth (DE)**
Erfinder: **Wendel, Armin, Goethestrasse 20, D-5000 Köln 40 (DE)**

(74) Vertreter: **Redies, Bernd, Dr. rer. nat., COHAUSZ & *FLORACK Patentanwaltsbüro* Schumannstrasse 97 Postfach 14 01 47, D-4000 Düsseldorf 1 (DE)**

**EP 0 100 440 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Die Erfindung betrifft neue Herbizid-Emulsionskonzentrate bestehend aus einem Halogenphenoxyessigsäure-Derivat und ein Phospholipid.

Es ist bereits bekannt, dass Halogenphenoxyessigsäure-Derivate der allgemeinen Formel I

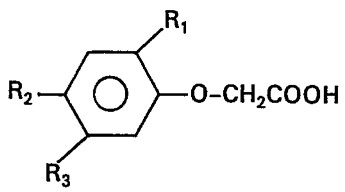

I

in der $R_1 = CH_3$ oder Cl, $R_2 = Cl$, $R_3 = H$ oder Cl bedeuten, als Herbizide eingesetzt werden können, die gute herbizide Wirkung besitzen.

Es wurde nun gefunden, dass man die Wirksamkeit sowie die Selektivität von Halogenphenoxyessigsäure-Derivaten der allgemeinen Formel I wesentlich verbessern kann, wenn man sie zusammen mit einem Phospholipid in Gegenwart eines Lösungsvermittlers der allgemeinen Formel II

$CH_3(CH_2)_n-CONHCH_2CH_2OH$ II

in der n = 3, 4 oder 5 bedeuten,
neben üblichen Träger-, Verdünnungs-, und Lösungs- und/oder anderen inerten Hilfsmitteln zu Emulsionskonzentraten verarbeitet.

Die erhaltenen Emulsionskonzentrate können unter Zusatz von Wasser zu üblichen Spritzbrühen verarbeitet werden.

Die Halogenphenoxyessigsäuren sind Verbindungen mit sehr unangenehmen Geruch. Durch den Zusatz der Phospholipide werden geruchsneutrale Formulierungen erhalten.

Gegenstand der Erfindung sind daher Herbizid-Emulsionskonzentrate der herbiziden Wirkstoffe der Formel I

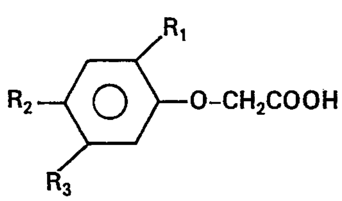

I

worin $R_1 = CH_3$ oder Cl, $R_2 = Cl$ und $R_3 = H$ oder Cl bedeuten,
die dadurch gekennzeichnet sind, dass sie aus

a) dem herbiziden Wirkstoff,
b) einem Phospholipid und
c) einem Hydroxyethylamid der allgemeinen Formel II

$CH_3(CH_2)_n-CONHCH_2CH_2OH$ II

worin n = 3, 4 oder 5 ist,
neben üblichen Träger-, Verdünnungs-, Lösungs-, Versprühungs- und/oder anderen inerten Hilfsmitteln bestehen. Besondere Ausführungsformen sind in den Ansprüchen 2 bis 13 definiert.

Gegenstand der Erfindung ist auch ein Verfahren zur Herstellung von diesen Herbizid-Emulsionskonzentraten wobei das Phospholipid in einem organischen Lösungsmittel bzw. Lösungsmittelgemisch unter Zusatz üblicher Hilfsmittel gelöst wird und in diese Lösung ggfs. durch Erwärmen und/oder Rühren das Herbizid eingebracht wird, wobei man das Herbizid mit dem Phospholipid in Gegenwart des Lösungsvermittlers der Formel II verarbeitet; ein Verfahren zur Herstellung von den genannten Herbizid-Emulsionskonzentraten wobei das oder die Herbizide mit einem oder mehreren Phospholipiden ggfs. unter Zusatz üblicher Füll- und Hilfsmittel in einem organischen Lösungsmittel gelöst bzw. aufgeschlämmt wird, wobei man das Herbizid mit dem Phospholipid in Gegenwart des Lösungsvermittlers der Formel II verarbeitet und noch ein Verfahren zur Herstellung von den genannten Herbizid-Emulsionskonzentraten, wobei das Herbizid in Wasser oder Wasser-Alkohol-Mischungen zusammen mit einem oder mehreren Phospholipiden unter Rühren und/oder leichter Erwärmung, und/oder Ultraschall gelöst wird, wobei man das Herbizid mit dem Phospholipid in Gegenwart des Lösungsvermittlers der Formel II verarbeitet.

Als Phospholipide kommen natürliche oder synthetische Phospholipide aus der Gruppe Phosphatidylcholin, den hydrierten Phosphatidylcholinen, Phosphatidylethanolamin, den N-Acylphosphatidylethanolamine, Phosphatidylinosit, Phosphatidylserin und Phosphatidylglycerol oder einem Gemisch aus mehreren solcher Phospholipide, wie Gemische aus Phosphatidylcholin und Phosphatidylethanolain oder Phosphatidylcholin mit Phosphatidylethanolamin und N-Acylphosphatidylethanolamin oder sonstigen Phosphatidyl-Mischungen mit 10 bis 60% Phosphatidylcholin-Anteil in Frage.

Besonders bevorzugt sind natürliche Phosphatidylcholine, die nach den in den folgenden Patenten beschriebenen Verfahren erhalten werden können: DE-PS 1 047 597, DE-PS 1 053 299, DE-PS 1 617 679, DE-PS 1 617 680, deutsche Patentanmeldungen DE-OS 3 047 048, DE-OS 3 047 012 oder DE-OS 3 047 011.

Als N-Acyl-phosphatidylethanolamine kommen insbesondere diejenigen in Betracht, in denen die Acylgruppe sich von gesättigten oder olefinisch ungesättigten Fettsäuren mit 2 bis 20 Kohlenstoffatomen, insbesondere die gesättigten mit 2 bis 5 Kohlenstoffatomen oder die gesättigten oder einmal olefinisch ungesättigten mit 14, 16, 18 oder 20 Kohlenstoffatomen in Frage.

Besonders bevorzugt sind Phospholipide, die
10–50% Phosphatidylcholin
10–30% Phosphatidylethanolamin
10–30% N-Acylphosphatidylethanolamin enthalten.

Als Herbizid kommen Halogenphenoxyessigsäure-Derivate der allgemeinen Formel I

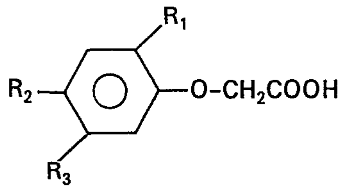

I

in der $R_1 = CH_3$ oder Cl, $R_2$ = Cl, $R_3$ = H oder Cl wie z.B.
2,4-Dichlorphenoxyessigsäure
2-Methyl-4-chlor-phenoxyessigsäure
2,4,5-Trichlorphenoxyessigsäure in Frage.

Die Verbindungen der allgemeinen Formel I sind bekannte Verbindungen.

Zur Herstellung der neuen Herbizid-Emulsionskonzentrate wird das entsprechende Phospholipid in einem geeigneten Lösungsmittel, wie Toluol, Essigester, Xylol, Benzin, Isophoron, Methanol, Ethanol oder Butanol oder Gemische dieser lösungsmittel gelöst. In die Phospholipidlösung wird unter Zusatz geeigneter Emulgatoren und Lösungsvermittler und ggfs. weiterer inerter Hilfsstoffe das Herbizid eingebracht und unter leichter Erwärmung gelöst bzw. emulgiert oder suspendiert.

Das Emulsionskonzentrat kann auch hergestellt werden, indem alle Stoffe gleichzeitig zusammengegeben werden und das entsprechende Konzentrat unter Rühren hergestellt wird.

Beispiel 1

| | |
|---|---|
| 22,0 g/l | 2,4-Dichlorphenoxyessigsäure |
| 16,0 g/l | N-(2-Hydroxyetyhl)-capronsäureamid |
| 23,8 g/l | Phospholipid |
| 18,1 g/l | Isophoron |
| 9,1 g/l | Glycerin |
| 3,0 g/l | Cremophor EL® |
| 8,0 g/l | Methanol |

Das Phospholipid wird mit N-(2-Hydroxyethyl)-capronsäureamid in dem Lösungsmittelgemisch gelöst und zu der Lösung aus 2,4-Dichlorphenoxyessigsäure in Methanol unter Rühren und leichter Erwärmung gegeben.

Analog Beispiel 1 wurden folgende Konzentrate hergestellt:

Beispile 2

| | |
|---|---|
| 22,0 g/l | 2-Methyl-4-chlor-phenoxyessigsäure |
| 23,0 g/l | Phospholipid |
| 18,3 g/l | N-(2-Hydroxyethyl)-capronsäureamid |
| 17,8 g/l | Isophoron |
| 8,9 g/l | Glycerin |
| 2,0 g/l | Cremophor EL® |
| 8,0 g/l | Methanol |

Beispiel 3

| | |
|---|---|
| 20,0 g/l | 2,4,5-Trichlorphenoxyessigsäure |
| 30,0 g/l | Phospholipid |
| 7,6 g/l | N-(2-Hydroxyethyl)-capronsäureamid |
| 19,9 g/l | Ethylcellosolve |
| 8,0 g/l | Butanol |
| 7,5 g/l | Methanol |
| 4,0 g/l | Essigester |
| 2,0 g/l | Cremophor EL® |
| 1,0 g/l | Marlowet IHF® |

Die in den vorstehenden Beispielen 1 bis 3 verwendeten Phospholipid-Produkte hatten die folgende Zusammensetzung, wobei die angegebenen Prozente Gewichtsprozente sind:

Beispiel 1:
40% Phosphatidylcholin
30% Phosphatidylethanolamin
25% N-acylphosphatidylethanolamin
5% sonstige Phospholipide

Beispiel 2:
42% Phosphatidylcholin
25% Phosphatidylethanolamin
25% N-acylphosphatidylethanolamin
8% sonstige Phospholipide

Beispiel 3:
45% Phosphatidylcholin
25% Phosphatidylethanolamin
21% N-acylphosphatidylethanolamin
9% sonstige Phospholipide

**Patentansprüche**

1. Herbizid-Emulsionskonzentrate der herbiziden Wirkstoffe der Formel I

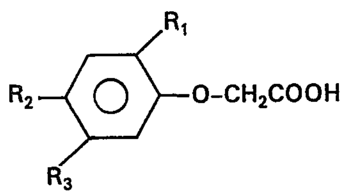

I

worin $R_1 = CH_3$ oder Cl, $R_2$ = Cl und $R_3$ = H oder Cl bedeuten,
dadurch gekennzeichnet, dass sie aus einem Gemisch aus
a) dem herbiziden Wirkstoff,
b) einem Phospholipid und
c) einem Hydroxyethylamid der allgemeinen Formel II

$$CH_3(CH_2)_n\text{-}CONHCH_2CH_2OH \qquad II$$

worin n = 3, 4 oder 5 ist,
neben üblichen Träger-, Verdünnungs-, Lösungs, Versprühungs- und/oder anderen inerten Hilfsmitteln bestehen.

2. Herbizid-Emulsionskonzentrate, dadurch gekennzeichnet, dass als Phospholipid ein oder mehrere Phospholipide aus der Gruppe Phosphatidylcholin, den hydrierten Phosphatidylcholinen, Phosphatidylethanolamin, den N-Acylphosphatidylethanolaminen, Phosphatidylinosit, Phosphatidylserin, Lysolecithin und Phosphatidylglycerol eingesetzt werden.

3 Herbizid-Emulsionskonzentrate gemäss dem Anspruch 1 oder 2 dadurch gekennzeichnet, dass als Phospholipid Phosphatidylcholin oder Mischungen aus Phosphatidylcholin und Phosphatidylethanolamin oder Mischungen aus Phosphatidylcholin/Phosphatidylethanolamin und

N-Acylphosphatidylethanolamin eingesetzt werden.

4. Herbizid-Emulsionskonzentrate gemäss der Ansprüche 1-3, dadurch gekennzeichnet, dass als Phospholipid ein Phospholipid mit einem Gehalt von 10-60% Phosphatidylcholin eingesetzt wird.

5. Herbizid-Emulsionskonzentrate gemäss der Ansprüche 1-4, dadurch gekennzeichnet, das als Phospholipid ein Phospholipid bestehend aus:
10-50% Phosphatidylcholin
10-30% Phosphatidylethanolamin
10-30% N-Acylphosphatidylethanolamin eingesetzt wird.

6. Herbizid-Emulsionskonzentrate gemäss der Ansprüche 1-5, dadurch gekennzeichnet, dass das Gewichtsverhältnis von a : b
1 : 0,5 bis 1 : 5 beträgt.

7. Herbizid-Emulsionskonzentrate gemäss der Ansprüche 1-5, dadurch gekennzeichnet, dass das Gewichtsverhältnis von a : b
1 : 1 bis 1 : 2 beträgt.

8. Herbizid-Emulsionskonzentrate gemäss der Ansprüche 1-5, dadurch gekennzeichnet, dass das Gewichtsverhältnis von a : b : c
1 : 1 : 1 beträgt.

9. Herbizid-Emulsionskonzentrate gemäss der Ansprüche 1-8, dadurch gekennzeichnet, dass als Herbizid 2,4-Dichlorphenoxyessigsäure eingesetzt wird.

10. Herbizid-Emulsionskonzentrate gemäss der Ansprüche 1-8, dadurch gekennzeichnet, dass als Herbizid 2-Methyl-4-chlorphenoxyessigsäure eingesetzt wird.

11. Herbizid-Emulsionskonzentrate gemäss der Ansprüche 1-8, dadurch gekennzeichnet, dass als Herbizid 2,4,5-Trichlorphenoxyessigsäure eingesetzt wird.

12. Herbizid-Emulsionskonzentrate gemäss einem oder mehreren der Ansprüche 1-7, dadurch gekennzeichnet, dass der Wirkstoffgehalt im Konzentrat 16-20% beträgt.

13. Verwendung von Herbizid-Emulsionskonzentraten gemäss einem oder mehreren der Ansprüche 1-7 zur Bekämpfung von Unkräutern.

14. Verfahren zur Herstellung von Herbizid-Emulsionskonzentraten gemäss einem oder mehreren der Ansprüche 1 bis 13, dadurch gekennzeichnet, dass das Phospholipid in einem organischen Lösungsmittel bzw. Lösungsmittelgemisch unter Zusatz üblicher Hilfsmittel gelöst wird und in diese Lösung ggfs. durch Erwärmen und/oder Rühren das Herbizid eingebracht wird, wobei man das Herbizid mit dem Phospholipid in Gegenwart des Lösungsvermittlers der Formel II verarbeitet.

15. Verfahren zur Herstellung von Herbizid-Emulsionskonzentraten gemäss einem oder mehreren der Ansprüche 1 bis 13, dadurch gekennzeichnet, dass das oder die Herbizide mit einem oder mehreren Phospholipiden ggfs. unter Zusatz üblicher Füll- und Hilfsmittel in einem organischen Lösungsmittel gelöst bzw. aufgeschlämmt wird, wobei man das Herbizid mit dem Phospholipid in Gegenwart des Lösungsvermittlers der Formel II verarbeitet.

16. Verfahren zur Herstellung von Herbizid-Emulsionskonzentraten gemäss einem oder mehreren der Ansprüche 1 bis 13, dadurch gekennzeichnet, dass das Herbizid in Wasser oder Wasser-Alkohol-Mischungen zusammen mit einem oder mehreren Phospholipiden unter Rühren und/oder leichter Erwärmung, und/oder Ultraschall gelöst wird, wobei man das Herbizid mit dem Phospholipid in Gegenwart des Lösungsvermittlers der Formel II verarbeitet.

## Claims

1. Herbicidal emulsion concentrates of the herbicidal active ingredients of formula I

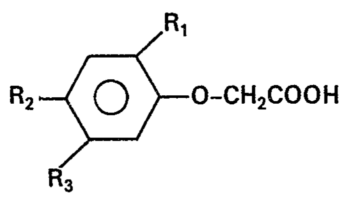

I

in which $R_1$ is $CH_3$ or Cl, $R_2$ is Cl, $R_3$ is H or Cl, characterised in that they consist
a) the herbicidal active ingredient,
b) a phospholipid and
c) a hydroxyethyl amide of the general formula II

$$CH_3(CH_2)_n-CONHCH_2CH_2OH \qquad II$$

in which n is 3, 4 or 5
together with conventional carriers, diluents, solvents, spraying media and/or other inert adjuvants.

2. Herbicidal emulsion concentrates, characterised in that the phospholipid used comprises one or more phospholipids from the group phosphatidyl choline, the hydrated phosphatidyl cholines, phosphatidyl ethanolamine, the N-acylphosphatidyl ethanolamines, phosphatidyl inositol, phosphatidyl serine, lysolecithin and phosphatidyl glycerol.

3. Herbicidal emulsion concentrates according to claim 1 or 2 characterised in that the phospholipid used is phosphatidyl choline or mixtures of phosphatidyl choline and phosphatidyl ethanolamine or mixtures of phosphatidyl choline/phosphatidyl ethanolamine and N-acylphosphatidyl ethanolamine.

4. Herbicidal emulsion concentrates according to claims 1 to 3, characterised in that the phospholipid used is a phospholipid with a phosphatidyl choline content of 10 to 60%.

5. Herbicidal emulsion concentrates according to claims 1 to 4, characterised in that the phospholipid used is a phospholipid consisting of:
10 to 50% phosphatidyl choline
10 to 30% phosphatidyl ethanolamine
10 to 30% N-acylphosphatidyl ethanolamine.

6. Herbicidal emulsion concentrates according to claims 1 to 5, characterised in that weight proportion of a : b is
1 : 0.5 to 1 : 5.

7. Herbicidal emulsion concentrates according to claims 1 to 5, characterised in that weight proportion of a : b is
1 : 1 to 1 : 2.

8. Herbicidal emulsion concentrates according to claims 1 to 5, characterised in that the weight proportion of a : b : c is
1 : 1 : 1.

9. Herbicidal emulsion concentrates according to claims 1 to 8, characterised in that the herbicide used is 2,4-dichlorophenoxyacetic acid.

10. Herbicidal emulsion concentrates according to claims 1 to 8, characterised in that the herbicide used is 2-methyl-4-chlorophenoxyacetic acid.

11. Herbicidal emulsion concentrates according to claims 1 to 8, characterised in that the herbicide used is 2,4,5-trichlorophenoxyacetic acid.

12. Herbicidal emulsion concentrates according to one or more of claims 1 to 7, characterised in that the active ingredient content of the concentrate is 16 to 20%.

13. The use of herbicidal emulsion concentrates according to one or more of claims 1 to 7 for combatting weeds.

14. Process for the preparation of herbicidal emulsion concentrates according to one or more of claims 1 to 13, characterised in that the phospholipid is dissolved in an organic solvent or solvent mixture with addition of conventional adjuvants, and that the herbicide is introduced into this solution, if necessary by means of heating and/or stirring, whereby the herbicide with the phospholipid is converted in the presence of the solvent according to formula II.

15. Process for the preparation of herbicidal emulsion concentrates according to one or more of claims 1 to 13, characterised in that the herbicide or herbicides is or are dissolved or made into a paste in an organic solvent together with one or more phospholipids, with optional addition of conventional filles and adjuvants, whereby the herbicide with the phospholipid is converted in the presence of the solvent according to formula II.

16. Process for the preparation of herbicidal emulsion concentrates according to one or more of claims 1 to 13, characterised in that the herbicide is dissolved in water or water-alcohol mixtures together with one or more phospholipids, with stirring and/or gentle heating, and/or ultrasound, whereby the herbicide with the phospholipid is converted in the presence of the solvent according to formula II.

**Revendications**

1. Concentrés herbicides pour émulsions, des substances actives herbicides de formule I

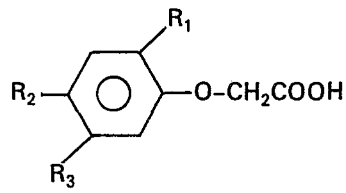

I

dans laquelle $R_1 = CH_3$ ou Cl $R_2 = Cl$, et $R_3 = H$ ou Cl,
caractérisés en ce qu'ils consistent en un mélange de:
a) la substance active herbicide,
b) un phospholipide, et
c) un hydroxyéthylamide de formule générale II

$CH_3(CH_2)_n\text{-}CONHCH_2CH_2OH$ II

dans laquelle n = 3, 4 ou 5, et des véhicules, diluants, solvants, produits auxiliaires de pulvérisation et/ou autres produits auxiliaires inertes usuels.

2. Concentrés herbicides pour émulsions caractérisés en ce que l'on utilise en tant que phospholipide un ou plusieurs phospholipides du groupe de la phosphatidylcholine, des phosphatidylcholines hydrogénées, de la phosphatidyléthanolamine, des N-acylphosphatidyléthanolamines, du phosphatidylinositol, de la phosphatidylsérine, de la lysolécithine et du phosphatidylglycérol.

3. Concentrés herbicides pour émulsions selon la revendication 1 ou 2, caractérisés en ce que l'on utilise en tant que phospholipide la phosphatidylcholine ou des mélanges de phosphatidylcholine et de phosphatidyléthanolamine ou des mélanges de phosphatidylcholine/phosphatidyléthanolamine et de N-acylphosphatidyléthanolamine.

4. Concentrés herbicides pour émulsions selon les revendications 1 à 3, caractérisés en ce que l'on utilise en tant que phospholipide un phospholipide contenant de 10 à 60% de phosphatidylcholine.

5. Concentrés herbicides pour émulsions selon les revendications 1 à 4, caractérisés en ce que l'on utilise en tant que phospholipide un phospholipide consistant en:
10 à 50% de phosphatidylcholine
10 à 30% de phosphatidyléthanolamine
10 à 30% de N-acylphosphatidyléthanolamine

6. Concentrés herbicides pour émulsions selon les revendications 1 à 5, caractérisés en ce que les proportions relatives a) : b) vont de 1 : 0,5 à 1 : 5.

7. Concentrés herbicides pour émulsions selon les revendications 1 à 5, caractérisés en ce que les proportions relatives a) : b) vont de 1 : 1 à 1 : 2.

8. Concentrés herbicides pour émulsions selon les revendications 1 à 5, caractérisés en ce que les proportions relatives a) : b) : c) sont de 1 : 1 : 1.

9. Concentrés herbicides pour émulsions selon les revendications 1 à 8, caractérisés en ce que l'on utilise en tant qu'herbicide l'acide 2,4-dichlorophénoxyacétique.

10. Concentrés herbicides pour émulsions selon les revendications 1 à 8, caractérisés en ce que l'on utilise en tant qu'herbicide l'acide 2-méthyl-4-chlorophénoxyacétique.

11. Concentrés herbicides pour émulsions selon les revendications 1 à 8, caractérisés en ce que l'on utilise en tant qu'herbicide l'acide 2,4,5-trichlorophénoxyacétique.

12. Concentrés herbicides pour émulsions selon une ou plusieurs des revendications 1 à 7, caractérisés en ce que la teneur en substance active du concentré est de 16 à 20%.

13 Utilisation des concentrés herbicides pour émulsions selon une ou plusieurs des revendications 1 à 7 dans la lutte contre les mauvaises herbes.

14. Procédé de préparation ds concentrés herbicides pour émulsions selon une ou plusieurs des revendications 1 à 13, caractérisé en ce que l'on dissout le phospholipide dans un solvant ou mélange solvant organique avec adjonction de produits auxiliaires usuels et on introduit l'herbicide dans cette solution éventuellement en chauffant et/ou sous agitation, l'herbicide étant traité par le phospholipide en présence de l'agent solubilisant de formule II.

15. Procédé de préparation des concentrés herbicides pour émulsions selon une ou plusieurs des revendications 1 à 13, caractérisé en ce que l'on dissout ou disperse le ou les herbicides avec un ou plusieurs phospholipides, éventuellement avec adjonction de matières de charge et produits auxiliaires usuels, dans un solvant organique, en traitant l'herbicide par le phospholipide en présence de l'agent solubilisant de formule II.

16. Procédé de préparation des concentrés herbicides pour émulsions selon une ou plusieurs des revendications 1 à 13, caractérisé en ce que l'on dissout l'herbicide dans l'eau ou des mélanges eau-alcool avec un ou plusieurs phospholipides, sous agitation et/ou léger réchauffement et/ou sous l'action d'ultrasons, en traitant l'herbicide par le phospholipide en présence de l'agent solubilisant de formule II.